# FASCICULE DE BREVET EUROPEEN

(11) **EP 3 164 348 B1**
(45) Date de publication et mention de la délivrance du brevet: **02.09.2020**
(21) Numéro de dépôt: 15733734.6
(22) Date de dépôt: 01.07.2015
(51) Int. Cl.: B65G 47/86, B67C 3/24

(54) **INSTALLATION DE TRANSPORT DE RECIPIENTS**
BEHÄLTERTRANSPORTVORRICHTUNG
CONTAINER TRANSPORT APPARATUS

(30) Priorité: 02.07.2014 FR 1456344
(43) Date de publication de la demande: 10.05.2017
(73) Titulaire: Serac Group, 72400 La Ferté Bernard (FR)
(72) Inventeur: GRAFFIN, André Jean Jacques, Chicago, Illinois 60185 (US)
(74) Mandataire: Lavialle, Bruno François Stéphane
(86) Numéro de dépôt international: PCT/EP2015/065043
(87) Numéro de publication internationale: WO 2016/001333

(56) Documents cités:
- WO-A1-2010/124768
- DE-A1- 10 146 118
- DE-A1- 10 247 362
- DE-A1-102011 006 714
- US-A- 3 488 994
- US-A- 5 575 379

## Description

La présente invention concerne le transport de récipients notamment dans une ligne de traitement desdits récipients.

Une ligne de traitement de récipients, par exemple de remplissage, comprend plusieurs postes et notamment un poste de nettoyage et/ou stérilisation, un poste de remplissage proprement dit et un poste de bouchage de récipients. Pour augmenter les cadences, les récipients sont traités alors qu'ils sont déplacés au moyen d'une installation de transport des récipients le long de la ligne.

Une telle installation de transport comprend généralement une succession de plateformes rotatives qui sont pourvues chacune de moyens de retenue des récipients sur la plateforme. Les moyens de retenue sont généralement des pinces sélectivement commandées dans une position ouverte et une position fermée au moyen d'actionneurs tels que des vérins pneumatiques ou électromagnétiques, ou bien encore des galets portés par les pinces pour coopérer avec des cames fixes. Il en résulte une relative complexité structurelle qui rend difficile le nettoyage de l'installation de transport. En outre, ces moyens sont générateurs de particules et ce d'autant plus que le nombre de pièces en mouvement relatif est élevé.

US 3,488,994 décrit une installation selon le préambule de la revendication 1.

Il est ainsi nécessaire de prévoir dans ces installations des buses supplémentaires dédiées au nettoyage des cames et des galets.

Un but de l'invention est de fournir une installation de transport de récipients qui soit plus simples.

A cet effet, on prévoit, selon l'invention, une installation de transport de récipients à goulot, comprenant une plateforme rotative intermédiaire pourvue en périphérie d'alvéoles et bordée par une unité d'amenée des récipients dans les alvéoles et une unité d'évacuation des récipients hors des alvéoles, une mâchoire étant montée sur la plateforme au voisinage de chaque alvéole pour pivoter entre une position fermée de retenue du récipient dans l'alvéole et une position ouverte. Chaque mâchoire est pourvue de moyens de son blocage dans chacune de ses positions et comporte une première surface de contact s'étendant en saillie dans l'alvéole lorsque la mâchoire est en position ouverte de telle manière que lorsque le goulot est introduit dans l'alvéole il pousse la première surface de contact et amène la mâchoire en position fermée et une deuxième surface de contact s'étendant en regard de l'alvéole lorsque la mâchoire est en position fermée de telle manière que lorsque le goulot est évacué de l'alvéole il pousse la deuxième surface de contact et amène la mâchoire en position ouverte.

Ainsi, les moyens de retenue des récipients sur la plateforme ne comportent chacun qu'une mâchoire mobile déplacée au moins en partie par le goulot du récipient lorsque celui-ci est introduit dans l'alvéole ou extrait de l'alvéole. Il en résulte une structure simple dont les formes extérieures peuvent être agencées de manière à en faciliter le nettoyage et/ou la décontamination.

D'autres caractéristiques et avantages de l'invention ressortiront à la lecture de la description qui suit de modes de réalisation particuliers non limitatifs de l'invention.

Il sera fait référence aux dessins annexés, parmi lesquels :

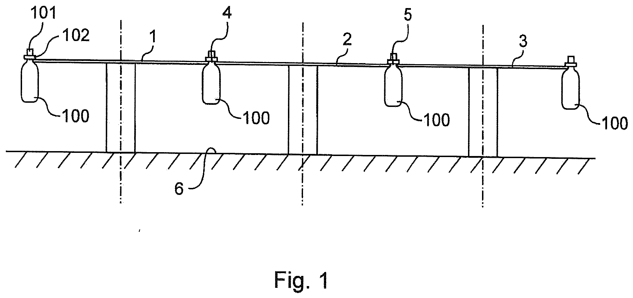

- la figure 1 est une vue schématique en élévation d'une installation de transport selon l'invention,

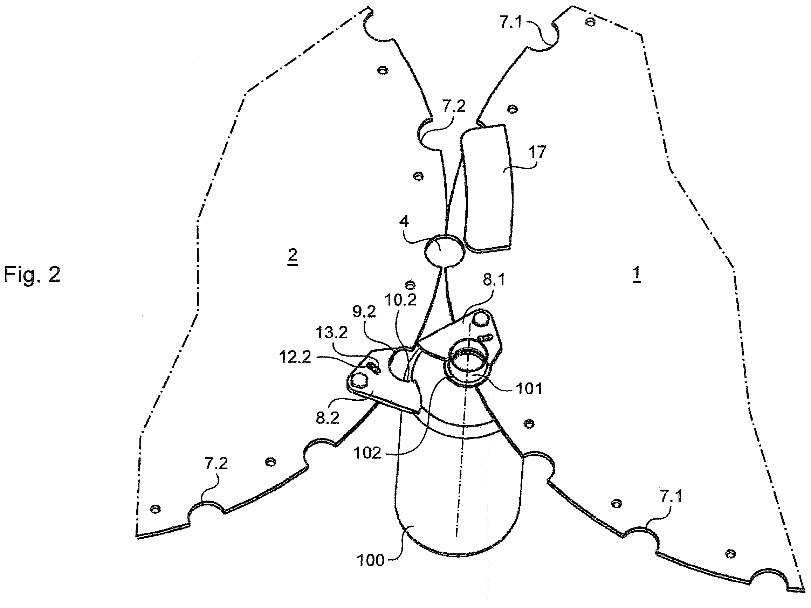

- la figure 2 est une vue schématique de détail, en perspective et de dessus, de la zone II de la figure 1,

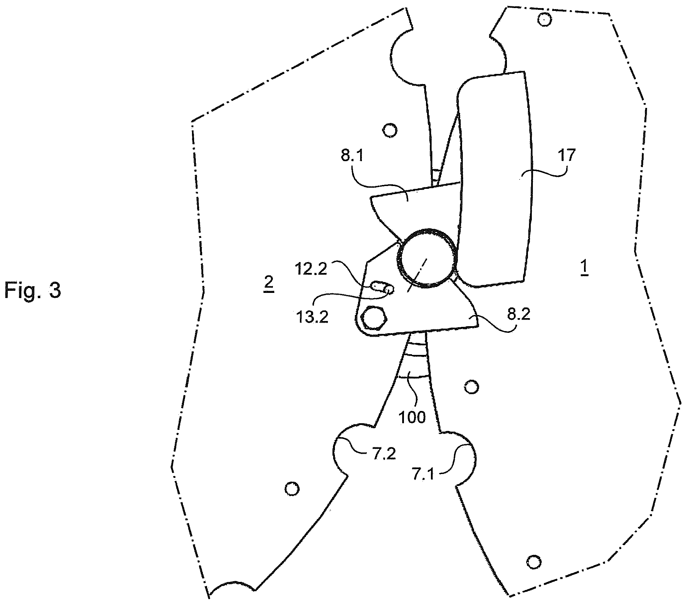

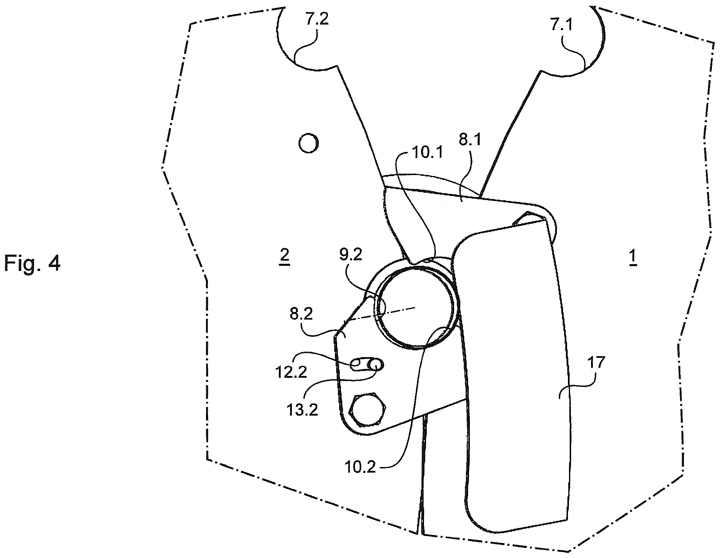

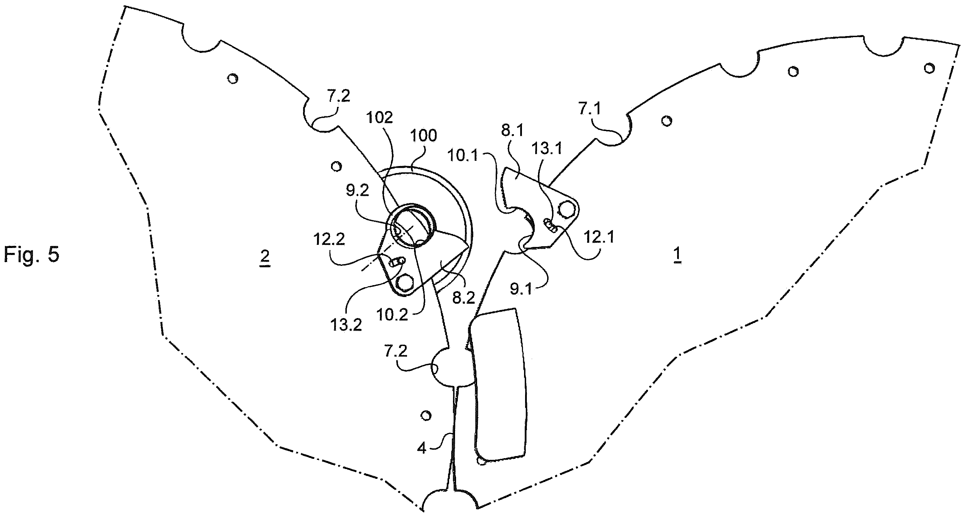

- les figures 3 à 5 sont des vues analogues à la figure 2 décomposant le transfert d'un récipient entre deux plateformes de l'installation,

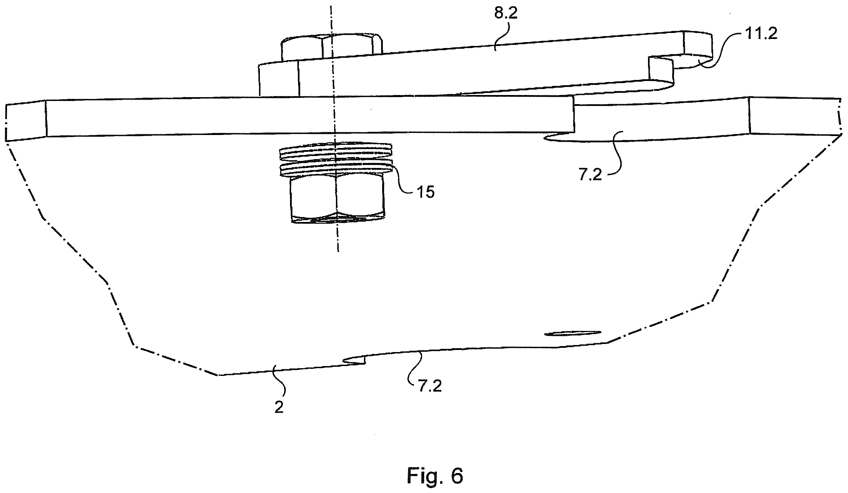

- la figure 6 est une vue schématique partielle, en perspective et de dessous, de l'installation.

En référence aux figures, l'installation de transport selon l'invention est ici décrite en application au traitement de récipients 100 ayant un goulot 101 pourvue d'une collerette 102 s'étendant en saillie latérale du goulot 101.

L'installation de transport selon l'invention comprend une plateforme amont 1, une plateforme intermédiaire 2 tangente à la plateforme amont 1 en un point de tangence 4 et une plateforme aval 3 tangente à la plateforme intermédiaire 2 en un point de tangence 5. Les plateformes 1, 2, 3 sont montées sur un bâti 6 pour pivoter. L'installation de transport comprend également un dispositif de chargement des récipients sur la plateforme amont 1 et un dispositif d'évacuation des récipients de la plateforme aval 3. Ces dispositifs sont connus en eux-mêmes et ne sont donc pas détaillés ici.

La plateforme amont 1 et la plateforme intermédiaire 2 sont toutes deux pourvues en périphérie d'alvéoles 7.1, 7.2. Chaque alvéole 7.1, 7.2 est formée d'une encoche en arc de cercle s'étendant sur un peu moins de 180° et ayant un rayon légèrement supérieur au rayon du goulot 101 pour accueillir une portion du goulot 101, la collerette 102 dudit goulot 101 reposant sur la portion de surface supérieure de la plateforme 1, 2 bordant l'alvéole 7.1, 7.2.

Au voisinage de chaque encoche 7.1, 7.2 est montée sur la plateforme 1, 2 une mâchoire 8.1, 8.2 pour pivoter entre une position fermée de retenue d'un goulot 101 de récipient 100 dans l'alvéole 7.1, 7.2 et une position ouverte permettant l'introduction du goulot 101 dans l'alvéole 7.1, 7.2 et son extraction hors de l'alvéole 7.1, 7.2 (on notera que seule une mâchoire 8.1 et une mâchoire 8.2 sont représentées sur les figures pour ne pas les alourdir). Chaque mâchoire 8.1 s'étend en aval de l'alvéole 7.1 à laquelle elle est associée sur la plateforme amont 1 et chaque mâchoire 8.2 s'étend en amont de l'alvéole 7.2 à laquelle elle est associée sur la plateforme intermédiaire 2.

Chaque mâchoire 8.1, 8.2 comprend une encoche délimitée par une paroi en arc de cercle dont font partie une première surface 9.1, 9.2 de contact avec le goulot 101 et une deuxième surface 10.1, 10.2 de contact avec le goulot 101. L'arc de cercle a ici le même rayon que l'alvéole 7.1, 7.2, le goulot 101 ayant le même diamètre au-dessus et en dessous de la collerette 102. Lorsque la mâchoire 8.1, 8.2 est en position fermée, la première surface de contact 9.1, 9.2 s'étend au-dessus d'une portion centrale du bord de l'alvéole 7.1, 7.2 et la deuxième surface de contact 10.1, 10.2 s'étend sensiblement en regard de la première surface de contact 9.1, 9.2 et obture en partie l'accès à l'alvéole 7.1, 7.2. Chaque mâchoire 8.1, 8.2 a une surface inférieure pourvue d'un lamage 11.1, 11.2 bordant l'encoche pour recevoir la collerette 102 lorsque la mâchoire 8.1, 8.2 est refermée sur un goulot 101.

Chaque mâchoire 8.1, 8.2 comprend en outre une rainure 12.1, 12.2 en arc de cercle dans laquelle est reçu un doigt 13.1, 13.2 s'étendant en saillie de la face supérieure de la plateforme 1, 2 pour définir la course de la mâchoire 8.1, 8.2 entre ses deux positions. Le doigt 13.1, 13.2 et les parois délimitant les extrémités de la rainure 12.1, 12.2 forment ainsi des butées définissant les positions ouverte et fermée de la mâchoire 8.1, 8.2.

Chaque mâchoire 8.1, 8.2 est enfin pourvue de moyens de son blocage dans chacune de ses positions.

Les moyens de blocage sont des moyens à friction qui sont ici formés d'un empilement de rondelles élastiques 15 de type Belleville qui sont montées coaxialement à l'axe de pivotement de chaque mâchoires 8.1, 8.2 pour plaquer celle-ci contre la plateforme 1, 2 et engendrer un frottement de la mâchoire 8.1, 8.2 contre la plateforme 1, 2 qui soit suffisant pour s'opposer au déplacement de la mâchoire 8.1, 8.2 de sa position fermée à sa position ouverte sous l'effet de la force centrifuge appliquée à la mâchoire 8.1, 8.2 elle-même et au récipient retenu dans l'alvéole 7.1, 7.2. Les rondelles élastiques 15 plaquent ainsi une surface de la mâchoire 8.2 contre la plateforme 2 pour engendrer un frottement résistant au pivotement de la mâchoire d'une de ses positions à l'autre.

Enfin, l'installation comprend un rail 17 s'étendant vers l'aval, par référence à un sens de circulation des récipients 100, depuis le point de tangence des plateformes amont 1 et intermédiaire 2, pour maintenir les récipients sur la plateforme intermédiaire 2 jusqu'à ce que les récipients 100 soient dégagés des mâchoires 8.1 de la plateforme amont 1. Le rail 17 a ici une forme sensiblement en arc de cercle centrée sur le centre de rotation de la plateforme intermédiaire 2.

Le transport d'un des récipients 100 va maintenant être décrit.

Le récipient 100 est en premier lieu chargé de manière connue en elle-même dans une alvéole 7.1 de la plateforme amont 1, la mâchoire 8.1 correspondante étant en position ouverte avec sa première surface de contact 9.1 s'étendant en travers de l'alvéole 7.1. Lorsque le goulot 101 est introduit dans l'alvéole 7.1, il pousse la première surface de contact 9.1 et amène la mâchoire 8.1 de sa position ouverte à sa position fermée en s'opposant à l'action des moyens de blocage. Les moyens de blocage maintiennent ensuite la mâchoire 8.1 en position fermée, la deuxième surface de contact 10.1 s'étendant en regard de l'alvéole 7.1 et s'opposant à l'échappement du goulot 101 hors de l'alvéole 7.1.

Légèrement en amont du point de tangence 4, l'alvéole 7.1 arrive en regard d'une alvéole 7.2 dont la mâchoire 8.2 est en position ouverte avec sa première surface de contact 9.2 s'étendant en travers de l'alvéole 7.2. Les alvéoles 7.1, 7.2 s'approchant du point de tangence 4, le goulot 101 arrive en contact de la première surface de contact 9.2 de la mâchoire 8.2 et amène celle-ci vers sa position fermée qui est atteinte lorsque l'alvéole arrive au point de tangence 4. En quittant le point de tangence 4, le goulot 101 prend contact avec le rail 17 qui maintient le goulot 101 dans l'alvéole 7.2 de la plateforme intermédiaire 2. Le goulot 101 pousse alors la deuxième surface de contact 10.1 de la mâchoire 8.1 et amène la mâchoire 8.1 en position ouverte en s'opposant à l'effort des moyens de blocage. Le récipient 100 est ainsi évacué de la plateforme amont 1 et pris en charge par la plateforme intermédiaire 2.

Le transfert des récipients de la plateforme intermédiaire 2 vers la plateforme aval 3 est effectué comme suit. La plateforme aval 3 est ici équipée de pinces commandées chacune pour saisir le goulot d'un récipient reçu dans une alvéole 7.2 en regard de la pince au point de tangence 5. Le point de tangence 5 passé, la pince s'éloigne de cette alvéole du fait de la rotation des plateformes 2, 3 et tire sur le récipient dont le goulot force l'ouverture de la mâchoire 8.2.

L'évacuation des récipients de la plateforme aval 3 est réalisée de manière classique.

Ainsi, ce sont les récipients qui déplacent les mâchoires 8.1, 8.2 entre leurs positions ouverte et fermée, ce qui explique qu'il ne soit pas nécessaire de prévoir des moyens dédiés pour agir sur les mâchoires 8.1, 8.2 et les déplacer entre leurs deux positions.

Bien entendu, l'invention n'est pas limitée aux modes de réalisation décrits mais englobe toute variante entrant dans le champ de l'invention telle que définie par les revendications.

En particulier, les rondelles Belleville peuvent être remplacées par un autre organe élastique comme un ressort de compression s'étendant coaxialement à l'axe de pivotement de la mâchoire.

Chaque mâchoire peut être en une seule pièce comme représenté sur les figures ou en plusieurs pièces.

Les plateformes amont et/ou aval peuvent avoir une structure différente de celle décrite, et comprendre des pinces commandées ou des mâchoires telles que celles décrites.

Les mâchoires peuvent être dépourvues des moyens de butée.

En variante, les moyens de blocage comprennent au moins un élément élastique pour appliquer la mâchoire dans l'une et l'autre position fermée et ouverte et pour exercer sur la mâchoire un pic d'effort lorsque la mâchoire est dans une position intermédiaire entre les positions ouverte et fermée. L'élément élastique est par exemple un ressort de compression qui s'étend parallèlement à la plateforme 1, 2 et a une extrémité solidaire de la plateforme 1, 2 et une extrémité en appui contre une portion désaxée de la mâchoire 8.1, 8.2 de telle manière que l'élément élastique se trouve dans un état relativement allongé lorsque la mâchoire 8.1, 8.2 se trouve dans ses positions ouverte et fermée et dans un état relativement raccourci lorsque la mâchoire 8.1, 8.2 se trouve dans une position intermédiaire entre ses positions ouverte et fermée.

## Revendications

1. Installation de transport de récipients à goulot, comprenant une plateforme rotative intermédiaire (2) pourvue en périphérie d'alvéoles (7.2) et bordée par une unité d'amenée des récipients dans les alvéoles et une unité d'évacuation des récipients hors des alvéoles, une mâchoire (8.2) étant montée sur la plateforme au voisinage de chaque alvéole pour pivoter entre une position fermée de retenue du récipient dans l'alvéole et une position ouverte, chaque mâchoire étant pourvue de moyens de son blocage (15) dans chacune de ses positions et comportant une première surface de contact (9.2) Z et une deuxième surface de contact (10.2),
l'installation étant **caractérisée en ce que**
la première surface de contact (9.2) s'étend en saillie dans l'alvéole lorsque la mâchoire est en position ouverte de telle manière que lorsque le goulot est introduit dans l'alvéole il pousse la première surface de contact et amène la mâchoire en position fermée et **en ce que** la deuxième surface de contact (10.2) s' étend en regard de l'alvéole lorsque la mâchoire est en position fermée de telle manière que lorsque le goulot est évacué de l'alvéole il pousse la deuxième surface de contact et amène la mâchoire en position ouverte.

2. Installation selon la revendication 1, dans laquelle la plateforme (2) comprend des butées définissant les positions fermée et ouverte.

3. Installation selon la revendication 2, dans laquelle les butées comportent un doigt (13.2) qui s'étend en saillie de la plateforme (2) pour être reçus dans une rainure (12.2) en arc de cercle ménagée dans la mâchoire (8.2).

4. Installation selon l'une quelconque des revendications 1 à 3, dans laquelle les moyens de blocage sont des moyens à friction.

5. Installation selon la revendication 4, dans laquelle les moyens à friction comprennent un organe élastique (15) plaquant une surface de la mâchoire (8.2) contre la plateforme (2) pour engendrer un frottement résistant au pivotement de la mâchoire.

6. Installation selon l'une quelconque des revendications 1 à 3, dans laquelle les moyens de blocage comprennent au moins un élément élastique pour s'appliquer contre la mâchoire (8.2) dans l'une et l'autre position fermée et ouverte et pour exercer sur la mâchoire un pic d'effort lorsque la mâchoire est dans une position intermédiaire entre les positions ouverte et fermée.

7. Installation selon l'une quelconque des revendications précédentes, dans laquelle chaque mâchoire (8.2) comprend une encoche délimitée par une paroi en arc de cercle dont font partie la première surface de contact (9.2) et la deuxième surface de contact (10.2).

8. Installation selon l'une quelconque des revendications précédentes, dans laquelle l'unité d'amenée est une plateforme rotative amont (1) qui possède des moyens de retenue des récipients sur la plateforme amont et qui tangente la plateforme intermédiaire en un point de tangence (4).

9. Installation selon la revendication 8, dans laquelle la plateforme amont (1) est pourvue, comme la plateforme intermédiaire (2), d'alvéoles (7.1) et de mâchoires (8.1) formant les moyens de retenue, chaque mâchoire s'étendant en aval de l'alvéole à laquelle elle est associée sur la plateforme amont et en amont de l'alvéole à laquelle elle est associée sur la plateforme intermédiaire, et un rail (17) s'étend sensiblement en aval du point de tangence des plateformes, par référence à un sens de circulation des récipients, pour maintenir les récipients sur la plateforme intermédiaire jusqu'à ce que les récipients soient dégagés des moyens de retenue de la plateforme amont.

## Patentansprüche

1. Anlage zum Transport von Behältern mit Hals, umfassend eine sich drehende Zwischenplattform (2), die am Umfang mit Zellen (7.2) versehen und von einer Zuführeinheit zum Zuführen von Behältern in die Zellen und einer Einheit zum Abführen von Behältern aus den Zellen begrenzt ist, wobei eine Klemmbacke (8.2) auf der Plattform in der Nähe jeder Zelle montiert ist, um sich zwischen einer geschlossenen Position zum Halten des Behälters in der Zelle und einer geöffneten Position zu verschwenken, wobei jede Klemmbacke mit Blockiermitteln (15) für ihre Blockierung in jeder ihrer Positionen versehen ist und eine erste Kontaktfläche (9.2) und eine zweite Kontaktfläche (10.2) umfasst, wobei die Anlage **dadurch gekennzeichnet ist, dass** die erste Kontaktfläche (9.2) in die Zelle vorsteht, wenn die Klemmbacke in der geöffneten Position ist, derart, dass, wenn der Hals in die Zelle eingefügt wird, er gegen die erste Kontaktfläche drückt und die Klemmbacke in die geschlossene Position bringt, und dass sich die zweite Kontaktfläche (10.2) gegenüber der Zelle erstreckt, wenn die Klemmbacke in der geschlossenen Position ist, derart, dass, wenn der Hals aus der Zelle abgeführt wird, er gegen die zweite Kontaktfläche drückt und die Klemmbacke in die geöffnete Position bringt.

2. Anlage nach Anspruch 1, bei der die Plattform (2) Anschläge umfasst, die die geschlossene und die geöffnete Position definieren.

3. Anlage nach Anspruch 2, bei der die Anschläge einen Finger (13.2) umfassen, der von der Plattform (2) vorsteht, um in einer kreisbogenförmigen Nut (12.2) aufgenommen zu werden, die in der Klemmbacke (8.2) ausgebildet ist.

4. Anlage nach einem der Ansprüche 1 bis 3, bei der die Blockiermittel Reibungsmittel sind.

5. Anlage nach Anspruch 4, bei der die Reibungsmittel ein elastisches Element (15) umfassen, das eine Oberfläche der Klemmbacke (8.2) gegen die Plattform (2) drückt, um eine Reibung zu erzeugen, die sich dem Verschwenken der Klemmbacke widersetzt.

6. Anlage nach einem der Ansprüche 1 bis 3, bei der die Blockiermittel mindestens ein elastisches Element umfassen, um an der Klemmbacke (8.2) sowohl in der geschlossenen Position als auch in der geöffneten Position anzuliegen und um auf die Klemmbacke eine Kraftspitze auszuüben, wenn die Klemmbacke in einer Zwischenposition zwischen der geöffneten Position und der geschlossenen Position ist.

7. Anlage nach einem der vorhergehenden Ansprüche, bei der jede Klemmbacke (8.2) eine Einkerbung umfasst, die von einer kreisbogenförmigen Wand begrenzt ist, zu der die erste Kontaktfläche (9.2) und die zweite Kontaktfläche (10.2) gehören.

8. Anlage nach einem der vorhergehenden Ansprüche, bei der die Zuführeinheit eine sich drehende stromaufwärtige Plattform (1) ist, die Mittel zum Halten von Behältern an der stromaufwärtigen Plattform besitzt und die die Zwischenplattform in einem Tangentialpunkt (4) berührt.

9. Anlage nach Anspruch 8, bei der die stromaufwärtige Plattform (1), wie die Zwischenplattform (2), mit Zellen (7.1) und Klemmbacken (8.1) versehen ist, die die Haltemittel bilden, wobei sich jede Klemmbacke stromabwärts der Zelle erstreckt, der sie auf der stromaufwärtigen Plattform zugeordnet ist, sowie stromaufwärts der Zelle, der sie auf der Zwischenplattform zugeordnet ist, und sich eine Schiene (17) im Wesentlichen stromabwärts des Tangentialpunktes der Plattformen in Bezug auf eine Bewegungsrichtung der Behälter erstreckt, um die Behälter an der Zwischenplattform zu halten, bis die Behälter aus den Haltemitteln der stromaufwärtigen Plattform gelöst sind.

## Claims

1. An installation for transporting containers having necks, the installation comprising an intermediate rotary platform (2) provided in its periphery with slots (7.2) and bordered by a feed unit for bringing containers into the slots and a unit for discharging containers from the slots, a jaw (8.2) being mounted on the platform in the vicinity of each slot in order to pivot between a closed position for holding the container in the slot and an open position, each jaw being provided with blocking means (15) for blocking it in each of its positions, and including a first contact surface (9.2) and a second contact surface (10.2), the installation being **characterized in that** the first contact surface (9.2) projects into the slot when the jaw is in the open position in such a manner that when the neck is inserted into the slot it pushes against the first contact surface and brings the jaw into the closed position, and **in that** the second contact surface (10.2) faces the slot when the jaw is in the closed position in such a manner that when the neck is discharged from the slot it pushes against the second contact surface and brings the jaw into the open position.

2. An installation according to claim 1, wherein the platform (2) has stops defining the closed and open positions.

3. An installation according to claim 2, wherein each stop comprises a finger (13.2) that projects from the platform (2) in order to be received in a circularly arcuate groove (12.2) formed in the jaw (8.2).

4. An installation according to any one of claims 1 to 3, wherein the blocking means are friction means.

5. An installation according to claim 4, wherein the friction means comprise a resilient member (15) pressing a surface of the jaw (8.2) against the platform (2) in order to generate friction opposing pivoting of the jaw.

6. An installation according to any one of claims 1 to 3, wherein the blocking means comprise at least one resilient element for pressing against the jaw (8.2) both in the closed position and in the open position and for exerting a force peak on the jaw when the jaw is in an intermediate position between the open and closed positions.

7. An installation according to any preceding claim, wherein each jaw (8.2) comprises a notch defined by a circularly arcuate wall, of which the first contact surface (9.2) and the second contact surface (10.2) form portions.

8. An installation according to any preceding claim, wherein the feed unit is an upstream rotary platform (1) that possesses means for holding containers on the upstream platform and that is tangential to the intermediate platform at a point of tangency (4).

9. An installation according to claim 8, wherein the upstream platform (1) is provided, like the intermediate platform (2), with slots (7.1) and jaws (8.1) forming holding means, each jaw extending downstream from the slot with which it is associated on the upstream platform or upstream from the slot with which it is associated on the intermediate platform, and a rail (17) extending substantially downstream from the point of tangency of the platforms relative to the travel direction of the containers in order to keep the containers on the intermediate platform until the containers are disengaged from the holding means of the upstream platform.
